# EUROPEAN PATENT APPLICATION

(11) **EP 2 090 868 A2**
(43) Date of publication of application: **19.08.2009**
(21) Application number: 09152096.5
(22) Date of filing: 04.02.2009
(51) Int. Cl.: G01C 21/16

(54) **Improved start time of gyro assembly**

(30) Priority: 15.02.2008 US 31950
(71) Applicant: Honeywell International Inc., Morristown, NJ 07962 (US)
(72) Inventor: Troske, Terrance, Morristown, NJ 07962-2245 (US); Sawyer, Mark, Morristown, NJ 07962-2245 (US); Sutton, Michael, Morristown, NJ 07962-2245 (US)
(74) Representative: Buckley, Guy Julian

(57) **Abstract**

An inertial measurement unit (IMU) (100) includes an assembly (110) including a plurality of gyroscopes. Each gyroscope has an associated motor bias control loop gain setting. The IMU (100) further includes an electronic device (130) in signal communication with the gyroscopes. The device (130) is configured to set the loop gain setting of a first gyroscope of the plurality to a first value to commence a startup time period of operation of the first gyroscope. The device (130) is further configured to set the loop gain setting of the first gyroscope to a second value to commence a normal time period of operation of the first gyroscope.

## Description

### BACKGROUND OF THE INVENTION

The start time of MEMS tuning fork gyros is often limited by the gains of various control loops required for operation. The optimized settings for the control loops for quick start are often contradictory to the optimized settings for high performance steady state operation. Many programs require both fast start times and high performance steady state operation.

### SUMMARY OF THE INVENTION

In an embodiment of the invention, an inertial measurement unit (IMU) includes an assembly including a plurality of gyroscopes. Each gyroscope has an associated motor bias loop gain setting. The IMU further includes an electronic device in signal communication with the gyroscopes. The device is configured to set the loop gain setting of a first gyroscope of the plurality to a first value to commence a startup time period of operation of the first gyroscope. The device is further configured to set the loop gain setting of the first gyroscope to a second value to commence a normal time period of operation of the first gyroscope.

### BRIEF DESCRIPTION OF THE DRAWINGS

Preferred and alternative embodiments of the present invention are described in detail below with reference to the following drawings.

FIG. 1 shows an IMU incorporating embodiments of the present invention;

FIG. 2 shows a timeline illustrating an embodiment of the present invention; and

FIG. 3 shows a process according to an embodiment of the invention.

### DETAILED DESCRIPTION OF THE PREFERRED EMBODIMENT

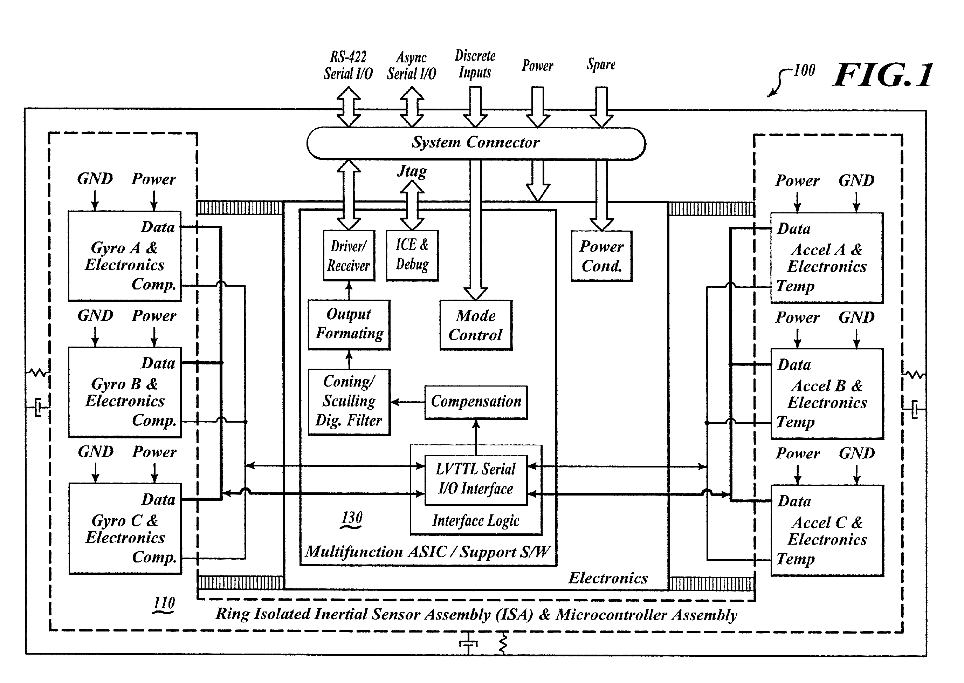

Referring to FIG. 1, devices according to an embodiment, such as, for example, the Honeywell® HG1930 Inertial Measurement Unit (IMU) 100, contain a 3-axis MEMS gyro assembly 110. Each channel (axis) of the gyro assembly contains one sensor and one analog ASIC (not shown). In an embodiment, all three channels share one digital ASIC and/or other electronic device, such as a microprocessor 130. In an embodiment, the ASICs control the gyro operation and provide the ability to configure individual control loop gains, described in further detail below, and other aspects of the gyro's operation.

The gyro sensor operates using the Coriolis effect, and may oscillate at an approximate design frequency of 10 kHz to 15 kHz. The natural oscillation frequency varies from sensor to sensor due to manufacturing variability. A Phase Lock Loop (PLL) circuit controls the gyro proof mass oscillation. The proof mass and associated oscillation drive mechanism is also referred to as the gyro "motor". When the PLL has acquired the actual frequency of a given sensor, that condition is usually called "PLOCK" (PLL locked).

In an embodiment, there are two kinds of gyro sensors: in-plane Upper Sense Plate (USP) gyros that sense rotation in the plane of the proof mass motion; and Out-of-Plane Gyros (OPG) that sense rotation perpendicular to the plane of the proof mass motion.

As described in the following, there may be three simultaneous operations that occur when the gyro is started.

When power is applied to the gyro assembly, the motor drive circuit (not shown) in the analog ASIC applies broadband white noise to the sensor motor in an attempt to find the sensor's natural frequency. Once a frequency is initially found, the PLL control circuit (not shown) waits a fixed period of time to ensure the motor control circuit has stabilized at the sensor's natural frequency. After that fixed period of time (in an embodiment, 400 ms), the PLOCK condition is declared. The amount of time it takes the circuit to find the frequency and attain the PLOCK condition is a driver of a gyro channel's start time.

Simultaneously, the motor drive circuit applies a high drive amplitude. The Automatic Gain Control (AGC) circuit (not shown) applies high energy to the proof mass until the proof mass oscillation approaches the desired amplitude. Once the proof mass approaches the desired amplitude (which, in an embodiment, occurs within two hundred milliseconds after PLOCK is attained), the AGC circuit reduces the applied energy such that the motor maintains the desired oscillation amplitude. The rotation rate signal (rate pick-off) increases in amplitude as the gyro sensor increases in oscillation amplitude.

As the gyro is starting and the rate pick-off signal becomes greater, a third control loop (not shown) searches for the amount of quadrature (sometimes called "motor bias") specific to that sensor. Quadrature is motion of the proof mass 90 degrees out of phase with the driven oscillatory motion. The motor bias control circuit of the Honeywell HG1930 IMU, for example, has a long time constant, a result of the filtering mechanism used to improve stability of the control loop during steady state operation. Depending upon how the motor bias loop is configured, and the natural amount of quadrature for a given sensor, it can take the loop several hundred milliseconds up to several seconds to find the appropriate steady-state value. This is a driver in the start time of a gyro channel.

As discussed above, the two main drivers in gyro start time are time to PLOCK and time for motor bias loop to converge. An embodiment of the invention described here addresses a start routine to address the sources of these main drivers.

An embodiment of the invention requires the ability to change the gains of the individual loops during operation. Since the gains are set to values that are not consistent with desired normal operation, problems may occur during startup if the gains persist for too long.

To address PLOCK, the motor position pick-off gains (the motor charge amp and motor AC gain) are set in a configuration to increase the detected pickoff. This gives more signal in the PLL detector circuit and helps the PLL acquire the frequency faster.

To address the motor bias loop, the rate signal gains are increased to maximum. This gives more signal in the motor bias loop and helps the loop converge faster. The maximum gains are suitable for short-duration start up but are not desirable for normal operating use in some applications. An embodiment of the invention takes advantage of higher rate signal gains.

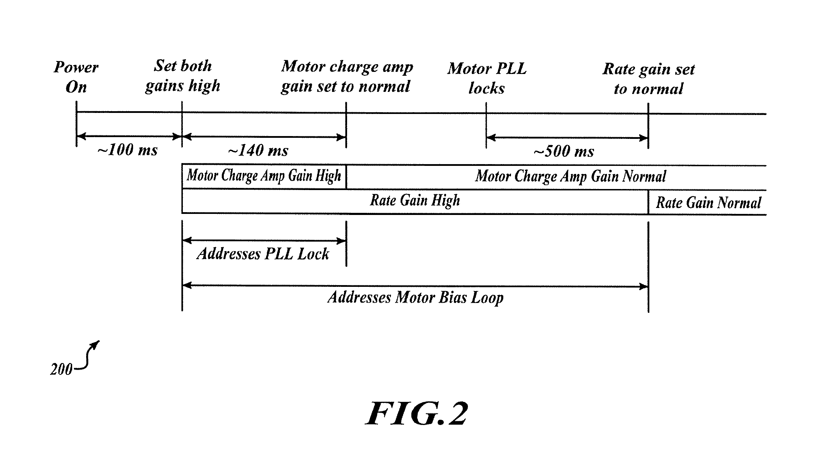

An exemplary timeline 200 illustrating operation of an embodiment of the invention is indicated in FIG. 2.

An embodiment of the invention includes software implemented by microprocessor 130, although the below-described process may be implemented in hardware, firmware, software, or a combination of the three. The implementation of an embodiment involves three sets of HPGD2 and/or HPG2 (analog) ASIC register configuration changes. At power-up, the initial ASIC parameters are set. For dynamic start, this means the motor charge amp gain, motor AC gain, and rate AC gain are configured to give high signal output - as much as 10 to 20 times more gain then is present during normal operation. Specific settings may depend upon the exact circuit design. In an embodiment, the gyro is allowed to operate with these settings for approximately 140 milliseconds (ms).

After that fixed duration, the motor charge amp gain and motor AC gain are returned to their normal values. Normal operating gains depend upon the required operational environments and depend upon the specific application. The rate AC gain is left high at this time. The 140 ms time is typically long enough to allow the PLL to find the frequency, but not so long that the motor has attained significant oscillation amplitude.

In an embodiment, these first two steps are easy to implement by including a fixed delay during the IMU power-on sequence.

In an embodiment, the software implementation performs processing at periodic intervals to process a new set of inertial sensor samples. A typical case uses a sampling rate of 1800 Hz. The software is considered to be "hard real-time", and therefore timing of operations within a given sample/processing frame is optionally advantageous.

The dynamic start control may therefore be implemented using a set of state machines associated with the microprocessor 130 to reduce the processing overhead in each processing frame. Each gyro channel may have its own state machine to track the initialization status of each channel and the ASIC registers that have been set. The interface from the IMU microprocessor 130 to the gyro ASICs may be serial in nature, permitting only one register access at a time. Therefore, the software implements at least one state machine to control access to respective gyro ASICs.

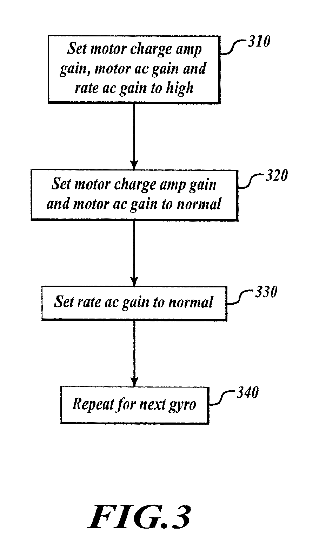

FIG. 3 illustrates a process 300 implementable in an assembly including a plurality of gyroscopes according to an embodiment of the invention. The process 300 is illustrated as a set of operations shown as discrete blocks. The process 300 may be implemented in any suitable hardware, software, firmware, or combination thereof. As such the process 300 may be implemented in computer-executable instructions that can be transferred from one computer, such as a server, to a second computer or other electronic device via a communications medium. The order in which the operations are described is not to be necessarily construed as a limitation.

At a block 310, the motor charge amp gain, motor AC gain, and rate AC gain of a first IMU gyroscope of the gyroscope assembly are set to provide high signal output. In an embodiment, the gyroscope is allowed to operate with these settings for approximately 140 milliseconds (ms).

At a block 320, the motor charge amp gain and motor AC gain are set or returned to their normal operating values. The rate AC gain is left high at this time.

At a block 330, the rate AC gain is set or returned to its normal operating value.

At a block 340, the steps described with reference to blocks 310-330 are repeated for a second IMU gyroscope of the gyroscope assembly.

While a preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.
The embodiments of the invention in which an exclusive property or privilege is claimed are defined as follows:

## Claims

1. An inertial measurement unit (IMU) (100) comprising:
an assembly (110) including a plurality of gyroscopes, each said gyroscope having an associated motor bias loop gain setting; and
an electronic device (130) in signal communication with the gyroscopes, the device (130) configured to set the loop gain setting of a first gyroscope of the plurality to a first value to commence a startup time period of operation of the first gyroscope, and set the loop gain setting of the first gyroscope to a second value to commence a normal time period of operation of the first gyroscope.

2. The unit (100) of claim 1 wherein the second value is less than the first value.

3. The unit (100) of claim 1 wherein:
each said gyroscope has an associated motor charge amplitude gain setting and rate AC gain setting; and
setting the loop gain setting of the first gyroscope to the first value includes setting the motor charge amplitude gain setting and rate AC gain setting to respective high values.

4. The unit (100) of claim 3 wherein setting the loop gain setting of the first gyroscope to the second value includes setting the motor charge amplitude gain setting to an associated first low value.

5. The unit (100) of claim 4 wherein setting the loop gain setting of the first gyroscope to the second value includes setting the rate AC gain setting to an associated second low value.

6. The unit (100) of claim 4 wherein the motor charge amplitude gain setting is set to the first low value before the rate AC gain setting is set to the second low value.

7. The unit (100) of claim 1 wherein:
each of the gyroscopes includes at least one ASIC; and
the electronic device (130) is further configured to set the loop gain setting of the first gyroscope to the first and second values by configuring the ASIC associated with the first gyroscope.

8. The unit (100) of claim 7 wherein the electronic device (130) is further configured to configure the ASIC associated with the first gyroscope by implementing at least one state machine.

9. A method implementable in an assembly (110) including a plurality of gyroscopes, each said gyroscope having an associated motor bias loop gain setting, the method comprising:
setting the loop gain setting of a first gyroscope of the plurality to a first value to commence a startup time period of operation of the first gyroscope; and
setting the loop gain setting of the first gyroscope to a second value to commence a normal time period of operation of the first gyroscope.

10. The method of claim 9 wherein the second value is less than the first value.
